# EUROPEAN PATENT APPLICATION

(11) **EP 4 763 621 A1**
(43) Date of publication of application: **24.06.2026**
(21) Application number: 24383438.9
(22) Date of filing: 20.12.2024
(51) Int. Cl.: B60R 1/06, B60R 1/12

(54) **A MIRROR HEAD ASSEMBLY FOR A REAR-VIEW MIRROR SYSTEM FOR A MOTOR VEHICLE**

(71) Applicant: Ficosa Automotive, S.L.U., 08232 Viladecavalls (ES)
(72) Inventor: BURILLO CUARTERO, Victor, 08232 VILADECAVALLS (ES); BRAVO CORBACHO, David, 08232 VILADECAVALLS (ES); GÓMEZ TIMONEDA, David, 08232 VILADECAVALLS (ES)
(74) Representative: ZBM Patents - Zea, Barlocci & Markvardsen

(57) **Abstract**

The present disclosure relates to a mirror head assembly for a rear-view mirror system for a motor vehicle. The mirror head assembly comprises a housing (10) and a bezel (20). The housing (10) comprises a mirror housing rear end portion (11). In turn, the mirror housing rear end portion (11) comprises an inner surface (111), and an outer C-shaped surface (112). The outer c-shaped surface (112) extends at least partially around an opening (113) of the housing (10). The bezel (20) comprises a bezel end portion (21) that extends at least partially around a bezel opening (213). In turn, the bezel (20) comprises an inner surface (211), an outer surface (212) , and a connecting surface (200) that connects the inner surface and the outer surface to each other, and wherein the connecting surface (200) of the bezel end portion (21) faces the inner surface (111) of the mirror housing rear end portion (11).

## Description

### FIELD OF TECHNOLOGY

The present disclosure relates to a mirror head assembly for a rear-view mirror system for a motor vehicle. Specifically, the mirror head assembly includes a housing and a bezel. The housing comprises a mirror housing rear end portion that includes an outer surface arranged at the outermost rear surface of the mirror head assembly according to a forward driving direction. The bezel comprises a bezel end portion facing an inner surface of the mirror housing rear end portion.

### BACKGROUND

In motor vehicles, reflective mirror devices, such as reflective elements employed in rear-view mirror systems, are utilized to assist the driver or user in viewing areas behind and to the sides of the motor vehicle. These devices are typically integrated within housings mounted to the side of the motor vehicle. The primary purpose of the housing is to hold the reflective mirror devices in an adjustable position relative to the motor vehicle, allowing the drivers or users to align the reflective mirror device according to their seating position to ensure optimal rearward visibility. Additionally, the housing serves to protect the reflective mirror devices from external influences, such as rain and wind. Furthermore, most housings are aerodynamically designed to minimize the vehicle's drag coefficient.

Typically, the housings may comprise several components or portions such as upper and lower covers. A bezel portion may surround the reflective mirror device, while the upper and lower portions, which may be aerodynamically shaped, provide protection for the reflective mirror devices against external factors. Conventionally, the separation edge or joint between the bezel portion and the upper o lower portions of the housing are located within a channel positioned circumferentially around the housing. These channels are traditionally used to reduce wind noise and collect water droplets.

However, positioning the separation edge within such a channel can lead to wind noise due to high-speed airflow around the separation edge. Or, alternatively, the bezel has to be asymmetric between driver side and passenger side, or the size of the mirror head is not optimized due to manufacturing constrains of the bezel. One-piece housings, in which the upper or lower portion and the bezel portion are formed as a single component, are sometimes employed to eliminate the need for a separation edge. However, manufacturing such one-piece housings through an injection molding process results in complex processing and thick-walled moldings.

It would be therefore desirable to provide an improved mirror head assembly and a rear-view mirror system in order to obviate the above-mentioned drawbacks and to provide advantageous solutions to the shortcomings in the prior art.

### SUMMARY

It is an object of the present invention to provide a mirror head assembly for a rear-view mirror system. In turn, the rear-view mirror system may be used for a vehicle, preferably, a motor vehicle. The rear-view mirror system may comprise a reflective mirror device that includes a reflective element. In this way, the rear-view mirror system is utilized to assist a driver or user in viewing areas behind and to the sides of the vehicle.

The mirror head assembly comprises a housing, and a bezel.

The bezel or frame may be adapted for enclosing (i.e., accommodating) the reflective mirror device. The bezel comprises an inner surface, an outer surface, and a connecting surface that connects the inner surface and the outer surface to each other.

The bezel comprises a bezel end portion extending at least partially around a bezel opening. In use, the bezel opening may be an aperture within the bezel, specifically designed to accommodate the placement of the reflective mirror element that can be exposed to the driver or user and function effectively. The bezel defines the bezel opening by surrounding it by the inner surface of the bezel. That is, the bezel opening is defined by the inner surface of the bezel. In fact, the (entire) bezel opening is arranged within the housing, and therefore, within a (housing) opening explained below.

The housing may serve to protect the reflective mirror element and the bezel from external influences, such as rain and wind. For this, a portion of the housing surrounds the bezel.

The housing comprises an interior side, and an exterior side. The exterior side can be viewable from outside of the rear-view mirror system. Instead, in use, (at least a portion of) the interior side of the housing cannot be viewable from the outside of the rear-view mirror system. This is because (the inner surface of the) the bezel and/or the reflective mirror element prevent(s) the interior side of the housing to be exposed to the exterior environment of the rear-view mirror system.

The housing comprises a mirror housing rear end portion, and the opening. In use, the opening or housing opening provides an appropriately sized and shaped space through which at least a portion of the bezel is arranged within the housing. Preferably, the (housing) opening may be an aperture within the housing, specifically designed to accommodate the placement of the reflective mirror element and the bezel. Thus, at least a portion of the reflective mirror element is exposed to the driver or user and can function effectively.

The mirror housing rear end portion includes an inner surface, and an outer C-shaped surface. The inner surface of the mirror housing rear end portion is not viewable from the exterior of the mirror head assembly, wherein the outer C-shaped surface is viewable from the exterior of the mirror head assembly. The outer C-shaped surface extends at least partially around the opening of the housing. In use, it is preferred that the outer C-shaped surface defines (an access of the) the opening of the housing.

The inner surface of the mirror housing rear end portion faces the connecting surface of the bezel end portion. In other words, the connecting surface of the bezel end portion faces the inner surface of the mirror housing rear end portion.

When the mirror head assembly is assembled, at least a portion of the connecting surface and the outer surface of the bezel do not come into contact with the exterior environment of the rear-view mirror system (i.e., are not viewable from the exterior of the rear-view mirror system). The outer C-shaped surface is arranged rearward, relative to a forward driving direction, with respect to any other portion of the bezel. In short, the outer C-shaped surface is positioned on the exterior-rear side of the housing, e.g., the outer C-shaped surface is the outermost rear surface of the mirror head assembly. In this way, the bezel end portion is arranged in front of the outer C-shaped surface according to the forward driving direction. In other words, the bezel end portion is at least partially surrounded by the housing. Furthermore, the bezel may be arranged between the outer C-shaped surface and an outermost forward surface of the housing.

A portion of the outer C-shaped surface may be connected to the exterior side of the housing, wherein an opposite portion of the outer C-shaped surface may be connected to the inner surface of the mirror housing rear end portion. In fact, the exterior side of the housing may (directly) connect to the outer C-shaped surface of the mirror housing rear end portion. Preferably, the outer C-shaped surface is flush with the inner surface of the bezel. Further, the inner surface of the bezel may continuously follow the contour of the outer C-shaped surface, without any space therebetween. Alternatively, the inner surface of the bezel may discontinuously follow the contour of the outer C-shaped surface, wherein a space may be provided between the inner surface of the bezel and the outer C-shaped surface.

The interior side of the housing may (directly) connect to the inner surface of the mirror housing rear end portion. For example, an angle between said inner surface and said interior side is of between 30°-120°, more preferably, between 30° and 95°. It may be even more preferred that both are arranged substantially perpendicular.

It is preferred that at least 75% of the inner surface of the mirror housing rear end portion is not curved. More preferably, the entire inner surface extends in a planar surface (two-dimensional surface).

In fact, the mirror housing rear end portion may be a peripheral protrusion extending inwardly (i.e., projecting further away from the exterior side of the housing, e.g., at least partially around the opening of the housing). In this way, at least a portion of the connecting surface of the bezel and the outer surface of the bezel are not exposed to the environment, i.e., said surfaces of the bezel do not come into direct contact with the outside of the rear-view mirror system. That is, at least a portion of the connecting surface of the bezel and the outer surface of the bezel are not viewable from the exterior of the rear-view mirror system. Therefore, the bezel may be better protected from external impacts, agents, or factors. For example, the bezel end portion is surrounded by the mirror housing rear end portion and the interior side of the housing.

Further, the inner surface of the mirror housing rear end portion may be parallel to (i.e., follow the contour of) the connecting surface of the bezel. It is possible that the inner surface of the mirror housing rear end portion directly contacts to the connecting surface of the bezel. Alternatively, it is still possible that the inner surface of the mirror housing rear end portion does not directly contact to the connecting surface of the bezel. In any case, it is preferred that the attachment of the housing and the bezel with each other is not (directly) obtained by the connecting surface of the bezel (e.g., by the abutment of the connecting surface of the bezel and the inner surface of the mirror housing rear end portion). In other words, even if the connecting surface of the bezel abuts the inner surface of the mirror housing rear end portion, they do not engage or interact in a manner that would result in an attachment between the bezel and the housing, solely through such abutment.

The housing comprises a mirror housing attaching means on the interior side of the housing. Further, the bezel comprises a bezel attaching means on the outer surface of the bezel. In this way, the mirror housing attaching means and the bezel attaching means are adapted to engage each other. In use, the mirror housing and the bezel are attached to one another, with the mirror housing rear end portion forming the rearmost portion of the mirror head assembly.

Specifically, the engagement of the mirror housing attaching means and the bezel attaching means may extend continuously or non-continuously (i.e., discontinuously) around the perimeter of the opening of the housing. In either case, it is preferred that the mirror housing attaching means and the bezel attaching means may provide clamping pressure distributed at least partially around the opening. The non-continuous (i.e., discontinuous) engagement may be understood as one, two, or more contact portions spaced apart around the opening. It is possible that the upper cover may employ said continuous or discontinuous engagement, while the lower cover may not, or vice-versa: the lower cover may employ said continuous or discontinuous engagement, and the upper cover may not.

Preferably, the mirror housing attaching means includes a first engagement structure (e.g., a first L-shaped structure). Further, the bezel attaching means may include a second engagement structure (e.g., a second L-shaped structure) having a portion arranged overlapped between the first engagement structure (e.g., the first L-shaped structure) and the interior side of the mirror housing.

More preferably, the first L-shaped structure projects towards the bezel. Further, the second L-shaped structure may project towards the housing. It is even more preferred that one of the first L-shaped structure and the second L-shaped is an inverted L-shaped structure. In this way, the first L-shaped structure and the inverted L-shaped structure may interlock with one another, thereby securing the attachment of the housing to the bezel.

Preferably, at least a portion of the mirror housing rear end portion is arranged parallel to a portion of the first L-shaped structure. That is, at least a portion of both the mirror housing rear end portion and the first L-shaped structure extend parallel to each other, projecting inwardly to the (housing) opening.

It may be preferred that the first L-shaped structure and the inner surface of the mirror housing rear end portion are spaced apart, for example, by a distance greater than 3 mm in a direction substantially perpendicular to the reflective mirror element or the mirror housing rear end portion. The direction perpendicular to the reflective mirror element may be coincident or parallel to the driving direction.

The attachment between the housing and the bezel may be therefore offset relative to the inner surface of the mirror housing rear end portion. Instead, the attachment between the housing and the bezel may be positioned at a distance away from the outer C-shaped surface. That is, the housing and the bezel may not be attached to each other by the connecting surface of the bezel and the inner surface del mirror housing rear end portion, resulting in the following advantages:
- Reduced risk of damaging the outer C-shaped surface during assembly method;
- Reduced risk of damaging the inner surface of the bezel during assembly method;
- Reduced size of mirror-housing rear-end portion due to no engagement there;
- Reduced risk of paint accumulation in the inner surface of the mirror housing rear end portion; and
- Easier assembly due to the ability to position the L-structures at different heights (for being interlocked) based on the movements of the housing and the bezel for mounting them as required.

A gap may be defined between the interior side of the housing and the outer surface of the bezel. A distance of the gap in that direction may be at least 3 mm. Also, the gap may be delimited by the inner surface of the mirror housing rear end portion and the mirror housing attaching means. A distance of the gap in that direction may be at least 1 mm. In other words, the gap is surrounded by the interior side of the housing, the outer surface of the bezel, the inner surface of the mirror housing rear end portion and the mirror housing attaching means.

It is preferred that the housing and/or the bezel are manufactured by injection. Injection moulding may be defined as a method to obtain molded products by injecting plastic materials molten by heat into a mold, and then cooling and solidifying them.

As a consequence, the outer C-shaped surface and/or the inner surface of the bezel may be required to be painted. Painting said injection-molded parts may involve, for example, cleaning the parts to remove contaminants, followed by applying a primer to ensure better paint adhesion. Next, a base coat of paint is sprayed evenly onto the parts, using automated or manual spraying techniques, often in a controlled environment to prevent dust contamination. Finally, a clear coat may be applied for durability and gloss, and the parts may be cured in an oven to set the paint.

By virtue of the housing attachment means being spaced apart (i.e., offset) from (the inner surface of) the mirror housing rear end portion, an uneven distribution of paint applied to the housing and the bezel does not significantly affect their attachment. That is, in the event of paint accumulation on a portion of the housing and/or the bezel during paint application, the present invention enables the engagement of the housing attaching means and the bezel attaching means without inconvenience, particularly when such accumulation occurs at the rear end portion of the mirror housing and/or the end portion of the bezel.

The reflective mirror element may be arranged at the opening of the housing and the bezel opening. In fact, the reflective mirror element is a component configured to provide a reflective surface for visual observation. The reflective mirror element may be mounted to an actuator (e.g., glass actuator), which facilitates positional adjustment of the reflective mirror element to achieve desired viewing angles. The (glass) actuator may include mechanical or electronic mechanisms for precise movement and alignment of the reflective mirror element within the mirror head assembly, e.g., within the bezel and the housing. The movement and alignment of the reflective mirror element is relative to the housing and bezel.

According to an aspect of the present invention, the rear-view mirror system for a (motor) vehicle is provided, which comprises the mirror head assembly, and a support arm attached to the (motor) vehicle. The support arm may be particularly adapted for supporting the mirror head assembly.

### BRIEF DESCRIPTION OF THE DRAWINGS

Non-limiting examples of the present mirror head assembly and the rear-view mirror system for a motor vehicle will be described in the following, with reference to the appended drawings.

In the drawings:
Figure 1 is a perspective view of an example of a rear-view mirror for a motor vehicle, wherein the rear-view mirror comprises a mirror head assembly supported by a support arm;
Figure 2 is an exploded view of the mirror head assembly;
Figure 3 is an exploded view of further parts of the rear-view mirror;
Figure 4A is a cross sectional view B-B of figure 1;
Figure 4B is an enlarged fragmentary cross-sectional view of figure 4A;
Figures 5 and 6 are cross sectional views C-C and D-D respectively of figure 1;
Figure 7 is a perspective view of a lower cover of a housing that is a part of the mirror head assembly; and
Figure 8 is an enlarged fragmentary view of the lower cover of figure 7.

### DETAILED DESCRIPTION OF EXAMPLES

With reference of the non-limiting examples shown in the figures of the drawings, a mirror head assembly and a rear-view mirror assembly for a motor vehicle are disclosed herein.

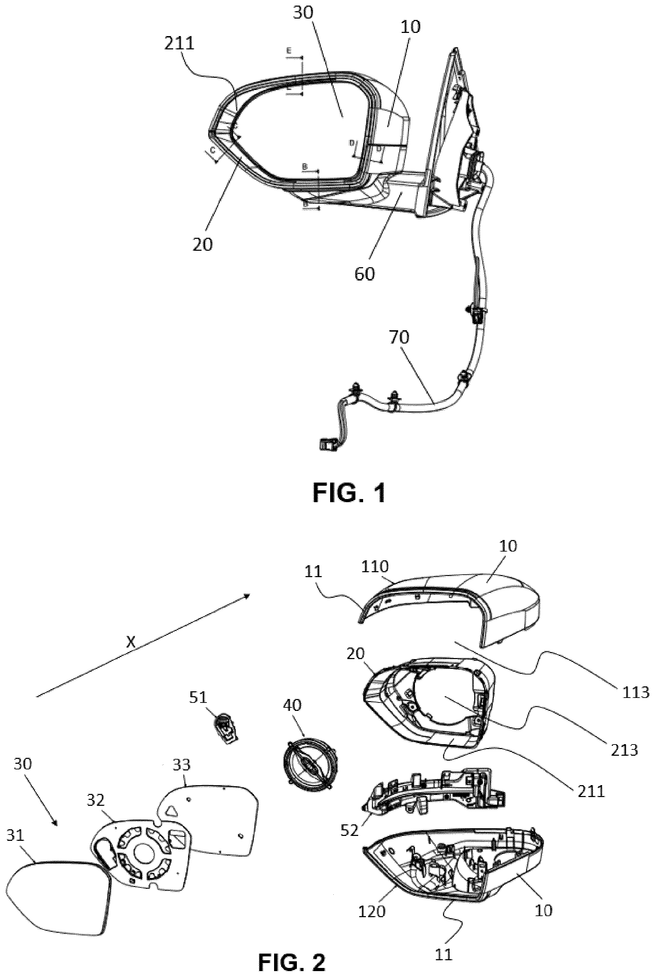

Figure 1 shows a rear-view mirror for a motor vehicle. The rear-view comprises a mirror head assembly supported by a support arm 60.

The mirror head assembly, in turn, comprises a housing 10, and a bezel 20 attached to each other.

Figure 1 shows that the housing 10 has a three-dimensional shape with an opening 113 (see figure 2), or housing opening, or cavity to cover various elements such as a reflective mirror element 31, and the bezel 20. The opening 113 provides an appropriately sized and shaped space through which the reflective mirror element 31 and the bezel 20 are arranged within the housing 10, such that, in use, the reflective mirror element 31 (see figure 2) is exposed to a driver or user to assist him/her in viewing areas behind and to the sides of the motor vehicle.

When the mirror head assembly is assembled, the housing 10 is arranged around the bezel 20. That is, the bezel 20 is surrounded by the housing 10. In this way, the housing 10 protects the reflective mirror arrangement 30 and the bezel 20 from external influences, such as rain, wind, and impacts.

Figure 2 illustrates the mirror head assembly in a driving direction X. The driving direction X corresponds to the forward longitudinal direction of a motor vehicle along its intended path of travel, as determined by its orientation and operation under normal driving conditions. The driving direction X represents the direction in which the vehicle moves when propelled by its drive system, excluding lateral or reverse movements.

Figure 2 shows the housing 10 comprises a first housing part or skull cap 110, and a second housing part or lower cover 120. In use, the skull cap 110 and the lower cover 120 are attached to each other or are at least secured in a manner that contributes to forming an enclosure defined by the housing 10. In this way, the housing 10 encloses the opening 113 therein. Also, the housing 10 can include further attachment points, e.g., lugs and/or recesses, for securing the housing 10 to further parts of an enclosure such as the bezel 20.

As depicted in figure 2, a reflective mirror arrangement 30 that includes the reflective mirror element 31. The reflective mirror arrangement 30 further comprises a back plate 32 to support the reflective mirror element 31, and optionally a heater element 33 to provide heat for increasing temperature of the reflective mirror element 31 as required. In examples, the heater element 33 is arranged between the back plate 32 and the reflective mirror element 31.

According to the driving direction X, the housing 10 of the rear-view mirror system can be divided into a front portion and a rear portion. The front portion of the housing 10 refers to the part of the housing 10 that faces the forward driving direction X, i.e., towards the direction of travel of the vehicle. Conversely, the rear portion of the housing 10 refers to the part of the housing 10 that is oriented away from the driving direction X, facing towards the rear of the vehicle.

The rear portion of the housing 10 is or includes a mirror-housing rear-end portion 11. Therefore, the housing 10 (e.g., the skull cap 110 and/or the lower cover 120) comprises the mirror housing rear end portion 11. As shown in figure 2, the mirror housing rear end portion 11 includes a circumferential edge of the housing 10 that runs at least partially around the opening 113. Particularly, the skull cap 110 includes a first circumferential edge of the housing 10 that runs partially around the opening 113, wherein the lower cover 120 includes a second circumferential edge of the housing 10 that runs partially around the opening 113. The first and second circumferential edges together define the circumferential edge of the housing 10. The term "circumferential edge" or periphery edge is not to be understood as necessarily defining a purely circular geometry but rather as at least partially enclosing the opening 113.

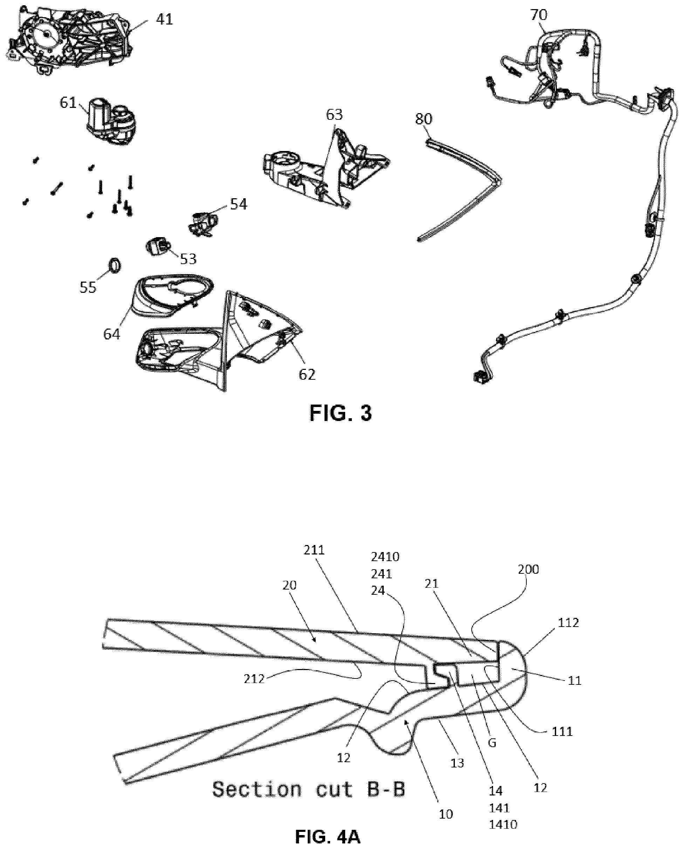

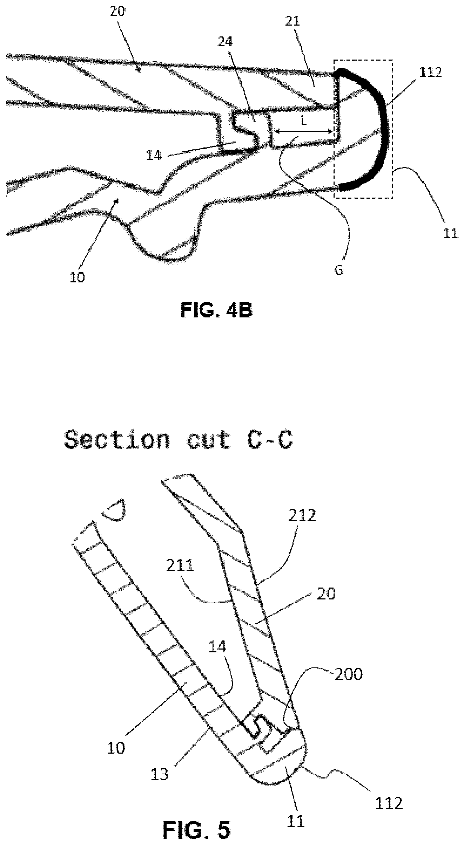

The circumferential edge of the housing 10 is an outer C-shaped surface 112 (see figures 4A-6). The outer C-shaped surface 112 is a rim with a C-shaped geometry, which is highlighted in Figure 4B for improved clarity. The outer C-shaped surface 112 includes a radius of curvature of at least 2.5 millimetres. Also, the mirror housing rear end portion 11 is depicted within a rectangle formed by dashed lines in Figure 4B to facilitate understanding.

As shown in figure 4A, the mirror housing rear end portion 11 comprises an inner surface 111, and the outer c-shaped surface 112 that extends at least partially around the opening 113 of the housing 10. As shown, the outer C-shaped surface 112 defines the access of the opening 113 of the housing.

When the mirror head assembly is assembled, it is possible that the mirror housing rear end portion 11 is arranged around the entire access of the opening 113 to completely encircle the opening 113 (see figure 2).

Figure 4A also shows that the bezel 20 comprises a bezel end portion 21 extending at least partially around a bezel opening 213 (see figure 2). The bezel opening 213 is an aperture within the bezel 20, specifically designed to accommodate the placement of the reflective mirror element 31 that can be exposed to the driver or user. The bezel 20 defines the bezel opening 213 by surrounding it by the inner surface 211 of the bezel. The entire bezel opening 213 is arranged within the housing 10, and therefore, within the opening 113.

In short, the bezel opening 213 is defined by the inner surface 211 of the bezel 20, and wherein the access of the opening 113 is defined by the outer C-shaped surface 112.

According to the driving direction X, the bezel 20 can be divided into a front portion and a rear portion. The front portion of the bezel 20 refers to the part of the bezel that faces the forward driving direction X, i.e., towards the direction of travel of the vehicle. Conversely, the rear portion of the bezel 20 refers to the part of the bezel 20 that is oriented away from the driving direction X, facing towards the rear of the vehicle. The rear portion of the bezel 20 is referred hereinafter as the bezel end portion 21.

As depicted in figure 4A, the bezel end portion 21 comprises an inner surface 211, an outer surface 212, and a connecting surface 200 that connects the inner surface 211 and the outer surface 212 to each other. Also, the connecting surface 200 of the bezel end portion 21 faces the inner surface 111 of the mirror housing rear end portion 11. In particular, the inner surface 111 of the mirror housing rear end portion 11 at least partially follows the contour of the connecting surface 200 of the bezel end portion 21.

As shown in the figure 4A, the housing 10 comprises an interior side 12, and an exterior side 13. The interior side 12 of the housing 10 connects with the inner surface 111 of the mirror housing rear end portion 11. The exterior side 13 of the housing 10 connects with the outer C-shaped surface 112 of the mirror housing rear end portion 11.

When the mirror head assembly is assembled, the connecting surface 200 and the outer surface 212 of the bezel do not come into contact with the exterior environment of the rear-view mirror system. In other words, the connecting surface 200 and the outer surface 212 of the bezel are not viewable from the exterior of the mirror head assembly. As shown, the bezel 20 is arranged between the forward side of the housing 10 and the mirror housing rear end portion. Particularly, the outer C-shaped surface 112 is positioned rearward, relative to the driving direction X, with respect to any other portion of the bezel 20. In other words, the outer C-shaped surface 112 is arranged in a more rearward position than any portion of the bezel 20. That is, the outer C-shaped surface 112 is defined as a rim arranged at the outermost rear location of the mirror housing rear end portion 11. It is noted that, in the known prior art, the arrangement is generally the other way around, with the bezel 20 occupying the most rearward position.

The outer C-shaped surface 112 and the exterior side 13 of the housing 10 come into contact with the exterior environment of the rear-view mirror system. In other words, the outer C-shaped surface 112 and the exterior side 13 of the housing 10 are viewable from the exterior of the mirror head assembly. Instead, the interior side 12 of the housing 10, and the inner surface 111 of the mirror housing rear end portion 11 do not come into contact with the exterior environment of the rear-view mirror system (e.g., viewable from the exterior of the mirror head assembly).

As shown, the C-shaped surface 112 is flush with the inner surface 211 of the bezel 20. The connecting surface 200 of the bezel 20 is arranged facing the mirror housing rear end portion 11. In other words, according to the driving direction X, the mirror housing rear end portion 11 is arranged behind the connecting surface 200. Therefore, the outer surface 212 of the bezel 20 and optionally the connecting surface 200 of the bezel 20 are not viewable to the driver or user when driving the motor vehicle. Instead, in operation, the inner surface 211 of the bezel 20 comes into contact with the exterior environment of the rear-view mirror system, making it viewable to the driver or user.

According to non-limiting examples, the angle between the inner surface 111 of the mirror housing rear end portion 11 and the interior side 12 of the housing 10 is of between 30°-120°, particularly, 45°-95°. In examples, the inner surface 111 of the mirror housing rear end portion 11 is straight (i.e., not curved), or at least 75% of the inner surface 111 is not curved. Additionally, the housing 10 extends in a direction parallel to the bezel 20, or at least, the inner surface 211 of the bezel 20 and the exterior side 13 of the housing 10 form an angle of less than 30° between them.

The inner surface 111 of the mirror housing rear end portion 11 does not function as an attaching member and, consequently, is not used for attachment purposes. It is possible that the inner surface 111 does not directly contact the connecting surface 200 of the bezel 20. Alternatively, the inner surface 111 may abut the connecting surface 200 of the bezel 20; however, in either case, the inner surface 111 is not an attaching member, such as a clamping mechanism, a clipping system, or the like.

The housing 10 and the bezel 20 are attached to each other. Figures 4A-6 show that the housing 10 comprises a mirror housing attaching means 14 on the interior side 12 of the housing 10. Additionally, the bezel 20 comprises a bezel attaching means 24 on the outer surface 212 of the bezel 20. In this way, the mirror housing attaching means 14 and the bezel attaching means 24 are adapted to engage each other. In fact, the mirror housing attaching means 14 and/or the bezel attaching means 24 include a clamping mechanism, a clipping system, or the like.

In particular, the mirror housing attaching means 14 includes a first L-shaped structure 141, and wherein the bezel attaching means 24 includes a second L-shaped structure 241 having a portion or protrusion 2410 arranged overlapped between the first L-shaped structure 141 and the interior side 12 of the housing 10.

For example, the first L-shaped structure 141 projects towards the bezel 20. Furthermore, the second L-shaped structure 241 projects towards the housing 10. In particular, the second L-shaped 241 is an inverted L-shaped structure such that they interlock with each other. In other words, the first L-shaped structure 141 is an engaging structure, wherein the second L-shaped structure 241 includes a inverted geometry relative to the first L-shaped structure 141, allowing it to interfit.

The first and second L-shaped structures 141, 241 form, in use, a clamp connection. Each of the first and second L-shaped structures 141, 241 includes (i) a projection extending further away from the exterior environment of the rear-view mirror system; and (ii) a protrusion 1410, 2410 extending substantially perpendicular to the protrusion 1410, 2410. In use, the protrusion 1410 is arranged therebetween the outer surface 212 of the bezel 20 and the protrusion 2410. Also, the protrusion 2410 is arranged therebetween interior side 12 of the housing 10 and the protrusion 141.

In examples, the mirror housing attaching means 14 (e.g., the first L-shaped structure 141) and/or the bezel attaching means 24 (e.g., the second L-shaped structure 241) include at least one clamp, particularly, a continuous clamp extending at least partially along the opening 113. Further, the mirror housing attaching means 14 (e.g., the first L-shaped structure 141) and/or the bezel attaching means 24 (e.g., the L-shaped structure 241) includes the protrusion 2410, 1410, in use, to be received and fixed by the clamp. The clamp may be provided with a curved structure to hold the protrusion 2410, 1410. It has been found that by using a clamping connection (e.g., the first L-shaped structure 141 and the second L-shaped structure 241), the mirror housing attaching means 14 and the bezel attaching means 24 can be quickly and reliably attached to each other.

The engagement of the mirror housing attaching means 14 and the bezel attaching means 24 may be continuous or discontinuous (i.e., non-continuous) along the opening 113 of the housing 10.

As shown in Figures 4A-6, a gap G is defined between the interior side 12 of the housing 10 and the outer surface 212 of the bezel 20. The gap G is further delimited by the inner surface 111 of the mirror housing rear end portion 11 and the mirror housing attaching means 14 (e.g., the first L-shaped structure 141). In examples, the first L-shaped structure 141 and the inner surface 111 of the mirror housing rear end portion 11 are spaced apart by a distance (L) greater than 3 mm, for example, between 4 mm and 40 mm, in the direction perpendicular to the reflective mirror element 31, or in the driving direction X. Similarly, the second L-shaped structure 241 and the inner surface 111 of the mirror housing rear end portion 11 are spaced apart by a distance (L) greater than 4 mm, for example, between 4 mm and 40 mm, in the direction perpendicular to the reflective mirror element 31, or in the driving direction X.

On other words, the mirror housing attaching means 14 is arranged between the bezel attaching means 24 and the gap G. Alternatively, the bezel attaching means 24 is arranged between the mirror housing attaching means 14 and the gap G. Furthermore, the gap G is arranged between the mirror housing attaching means 14 and the inner surface 111. Alternatively, the gap G is arranged between the bezel attaching means 24 and the inner surface 111.

The fact that the attachment of the housing 10 to the bezel 20 does not occur at the mirror housing rear end portion 11, but rather that the mirror housing attaching means 14 and the bezel attaching means 24 are offset (spaced apart), provides the following advantages: First, the likelihood of damaging the outer C-shaped surface 112 during the assembly process is reduced. Second, it facilitates an improved assembly of the housing 10 and the bezel 20, as the housing attaching means 14 (e.g., the first L-shaped structure 141) and the bezel attaching means 24 (e.g., the second L-shaped structure 241) can advantageously be positioned at different distances from the inner surface 111 when engaged (e.g., interlocked) with each other.

In examples, the housing 10 and the bezel 20 are manufactured by injection. In particular, at least the outer C-shaped surface 112 and the inner surface 211 of the bezel 20 are painted.

By virtue of the housing attachment means 14 being spaced apart (i.e., offset) from the inner surface 111 of the mirror housing rear end portion 11, an uneven distribution of paint applied to the housing 10 and the bezel 20 does not significantly affect their attachment. That is, in the event of paint accumulation at the inner surface 111 of the mirror housing rear end portion 11, the end portion 21 of the bezel 20, and/or the gap G, the mirror head assembly enables the engagement of the housing attaching means 14 and the bezel attaching means 24 without inconvenience.

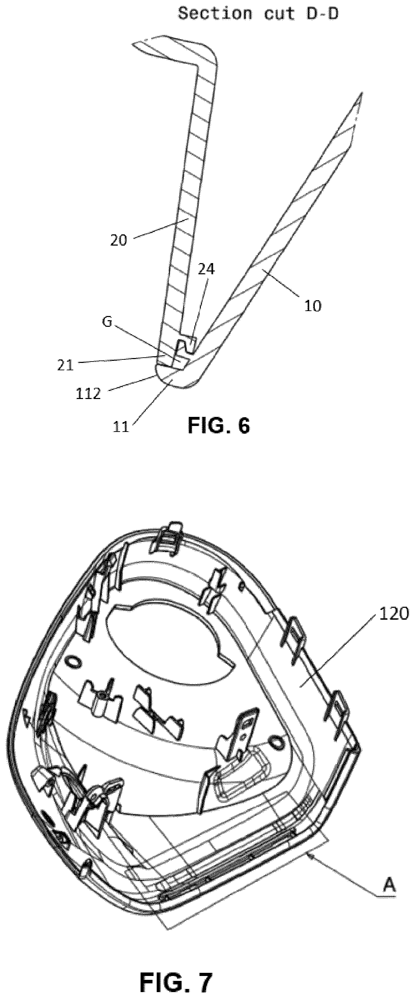

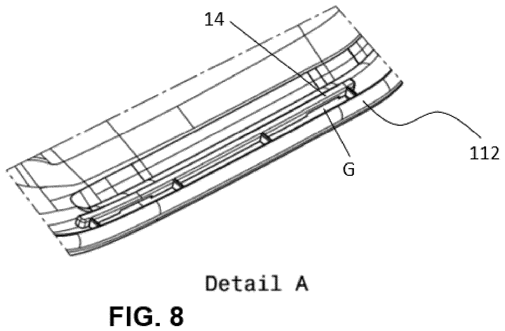

Figure 7 discloses the lower cover 120. Figure 8 is an enlarged view of detail A that shows the outer C-shaped surface 112, the gap G, and the mirror housing attaching means 14.

Referring back to figure 2, the mirror head assembly (e.g., the reflective mirror arrangement 30) further comprises a blind spot detecting device or BSD 51. The BSD 51 is configured to detect the presence of vehicles in the blind spots of a driver's field of view. It typically consists of sensors, such as radar or cameras, integrated into the mirror housing or surrounding vehicle structure. The BSD 51 provides visual, auditory, or tactile alerts to the driver or user when a vehicle is detected in an adjacent lane, assisting in safer lane-changing and driving decisions.

Still in figure 2, the reflective mirror arrangement 30 is coupled to a glass actuator 40, which facilitates positional adjustment of the reflective mirror element 31 to achieve desired viewing angles. The glass actuator 40 may include mechanical or electronic mechanisms for precise movement and adjustment of the reflective mirror element 31 within the mirror head assembly, e.g., within the bezel 20 and the housing 10.

A blinker device 52 is further provided. The housing 10 is further adapted for receiving a blinker device 52, e.g., the blinker device 52 is fixed to the housing 10. The blinker device 52 is an integrated indicator light designed to signal the driver's intention to turn or change lanes. It is typically positioned on the exterior-facing side of the mirror housing 10, making it visible to other road users. The blinker device 52 operates in synchronization with a vehicle's turn signal system (not shown), enhancing safety by improving visibility and communication of the driver's intended movements. In examples, the blinker device 52 is supported by the lower cover 120 and the skull cap 110.

Moving to figure 3, the rear-view mirror system further comprises a housing bracket 41 which at least holds the reflective mirror arrangement 30 and a power fold actuator 61, a motorized mechanism configured to adjust the position of the mirror housing 10 by folding it toward or away from the vehicle body. This power fold actuator 61 is typically integrated within the mirror assembly and is controlled electronically, enabling automatic or manual folding to protect the mirror during parking, enhance aerodynamics, or improve accessibility in confined spaces.

Figure 3 shows that the rear-view mirror system further comprises a camera device 53 configured to acquire image data of the exterior environment of the motor vehicle. In particular, the camera device 53 is a camera for a surround-view system. Other applications, such as for a digital exterior rear-view mirror, are not ruled out. In a non-limiting example, the camera device 53 may be supported by a camera bracket 54 as required. Furthermore, a camera gasket 55 is further provided. The camera gasket 55 is a sealing component designed to secure and protect the camera device 53 integrated into the mirror head assembly. It prevents the ingress of dust, water, and other contaminants, ensuring proper functionality and durability of the camera device 53. The camera gasket 55 also helps to dampen vibrations and maintain the alignment of the camera within the housing.

Still in figure 3, the rear-view mirror system further comprises the base cover 62 that is optionally provided with a cutline seal 64. The base cover 62 holds the power fold actuator 61, and wherein the cutline seal 64 includes a hole for allowing the connection between the base cover 62 and the power fold actuator 61.

Figure 3 further shows that the rear-view mirror system comprises a base bracket 63. The base bracket 63 is a structural component configured to secure the mirror head assembly to the vehicle. It serves as the interface between the mirror head assembly and the vehicle body, typically attaching to the door or A-pillar. The base bracket 63 provides stability, supports adjustments, and may include integrated features such as mounting points for electrical connectors, actuators, or other mirror components.

The rear-view mirror system, according an example of figure 3, comprises a wiring harness 70, and a vehicle door gasket 80. The wiring harness 70 is an assembly of electrical cables and connectors designed to transmit power and signals between the mirror's internal components and the vehicle's electrical system. It facilitates the operation of features such as lighting (e.g., the blinker device 52), heating elements (e.g., heater element 33), camera systems (e.g., camera device 53), actuators (e.g., power fold actuator 61), and sensors, ensuring reliable connectivity and functionality within the mirror assembly. The vehicle door gasket 80 is a sealing component positioned between the mirror head assembly and the vehicle door. It is designed to prevent the ingress of water, dust, and air, ensuring a secure and weatherproof connection. The vehicle door gasket 80 also helps to reduce vibrations and noise, providing a stable interface between the rear-view mirror system and the vehicle door.

Although only a number of examples of the present mirror head assembly and the rear-view mirror system for a motor vehicle have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. Reference signs related to drawings placed in parentheses in a claim are solely for attempting to increase the intelligibility of the claim, and shall not be construed as limiting the scope of the claim.

## Claims

1. - A mirror head assembly for a rear-view mirror system for a motor vehicle, the mirror head assembly comprises:
- a housing (10) comprising a mirror housing rear end portion (11), the mirror housing rear end portion (11) comprises an inner surface (111), and an outer C-shaped surface (112) that extends at least partially around an opening (113) of the housing (10); and
- a bezel (20) comprising a bezel end portion (21) extending at least partially around a bezel opening (213),
wherein the bezel (20) comprises an inner surface (211), an outer surface (212), and a connecting surface (200) that connects the inner surface (211) and outer surface (212) to each other, and
wherein the connecting surface (200) of the bezel end portion faces the inner surface (111) of the mirror housing rear end portion (11).

2. - The mirror head assembly of claim 1, wherein the housing (10) comprises an interior side (12), and an exterior side (13), wherein the interior side (12) connects the inner surface (111) of the mirror housing rear end portion (11), and wherein the exterior side (13) connects to the outer C-shaped surface (112) of the mirror housing rear end portion (11).

3. - The mirror head assembly of any of the claims 1-2, wherein the housing (10) comprises a mirror housing attaching means (14) on the interior side of the housing, wherein the bezel (20) comprises a bezel attaching means (24) on the outer surface (212) of the bezel (20), and wherein the mirror housing attaching means (14) and the bezel attaching means (24) are adapted to engage each other.

4. The mirror head assembly of claim 3, wherein the mirror housing attaching means (14) is spaced apart from the inner surface (111) of the mirror housing rear end portion (11), optionally, by a distance (L) greater than 3 mm.

5. - The mirror head assembly of claims 3-4, wherein a gap (G) is defined between the interior side (12) of the housing (10) and the outer surface (212) of the bezel (20) being delimited by the inner surface (111) of the mirror housing rear end portion (11) and the mirror housing attaching means (14).

6. - The mirror head assembly of claims 3-5, wherein the mirror housing attaching means (14) includes a first L-shaped structure (141), and wherein the bezel attaching means (24) includes a second L-shaped structure (241) having a portion (2410) arranged overlapped between the first L-shaped structure (141) and the interior side (12) of the mirror housing.

7. - The mirror head assembly of claim 6, wherein the first L-shaped structure (141) projects towards the bezel (20), and wherein the second L-shaped structure (241) projects towards the housing (10), optionally, the first L-shaped structure (141) and the second L-shaped (241) are inverted to each other.

8. The mirror head assembly of claims 6-7, wherein the first L-shaped structure (141) and the inner surface (111) of the mirror housing rear end portion (11) are spaced apart by a distance (L) greater than 3 mm.

9. - The mirror head assembly of claims 1-8, wherein the outer C-shaped surface (112) is flush with the inner surface (211) of the bezel (20).

10. The mirror head assembly of claims 1-9, wherein the bezel opening (213) is defined by the inner surface (211) of the bezel (20), and wherein the outer C-shaped surface (112) defines the opening (113) of the housing (10).

11. - The mirror head assembly of claims 1-10, wherein the inner surface (111) of the mirror housing rear end portion (11) is parallel to the connecting surface (200) of the bezel (20), optionally, the mirror housing rear end portion (11) is arranged parallel to the first L-shaped structure (141).

12. - The mirror head assembly of claims 2-11, wherein the angle between the inner surface (111) of the mirror housing rear end portion (11) and the interior side (12) of the housing (10) is between 30°-120°.

13. The mirror head assembly of claims 1-12, wherein the outer C-shaped surface (112) and/or the inner surface (211) of the bezel (20) is/are painted, optionally, the housing (10) and the bezel (20) are manufactured by injection.

14. The mirror head assembly of claims 1-13, wherein it further comprises a reflective mirror element (31) arranged at the opening (113) of the housing (10) and the bezel opening (213).

15. The rear-view mirror system for a motor vehicle comprising:
- the mirror head assembly of any preceding claims; and
- a support arm (60) attached to the motor vehicle,
wherein the support arm (60) is adapted for supporting the mirror head assembly.
